# NEUE EUROPÄISCHE PATENTSCHRIFT

(11) **EP 0 898 898 B2**
(45) Veröffentlichungstag und Bekanntmachung des Hinweises auf die Entscheidung über den Einspruch: **12.12.2007**
(45) Hinweis auf die Patenterteilung: 20.03.2002
(21) Anmeldenummer: 98110524.0
(22) Anmeldetag: 09.06.1998
(51) Int. Cl.: A23G 3/00

(54) **Verfahren zur Herstellung einer essbaren Verpackung für flüssigkeitshaltige Lebensmittel**
Process for making edible package for liquids containing foodstuff
Procédé de fabrication d'emballages comestible pour aliments contenant des liquides

(30) Priorität: 22.08.1997 DE 19736608
(43) Veröffentlichungstag der Anmeldung: 03.03.1999
(73) Patentinhaber: Molkerei Alois Müller GmbH & Co., D-86850 Fischach-Aretsried (DE)
(72) Erfinder: Winterwerber, Harald, Dipl.-Ing., 86441 Zusmarshausen (DE); Immler, Birgit, Dipl.-Ing., 86199 Augsburg (DE); Weisbrich, Stefanie, Dipl.-Soz.wiss., 86150 Augsburg (DE); Wagner, Manfred, Dipl.-Ing. agrar., 86868 Mittelneufnach (DE); Unger, Ulrich, Dipl.-Ing., 87700 Memmingen (DE); Gross, Peter, Dipl.-Ing., 86850 Fischach (DE)
(74) Vertreter: Leinweber & Zimmermann

(56) Entgegenhaltungen:
- EP-A- 0 064 155
- EP-A- 0 498 190
- EP-A- 0 806 151
- WO-A-96/37109
- DE-A- 3 913 824
- DE-U- 9 211 592
- DE-U- 29 711 448
- FR-A- 380 038
- FR-A- 2 516 353
- FR-A- 2 586 009
- US-A- 4 874 618

## Beschreibung

Die Erfindung betrifft ein Verfahren zur Herstellung einer eßbaren Verpackung für flüssigkeitshaltige Lebensmittel, bei dem ein aus gebackenem Teig bestehender Mantel mit nach oben divergierenden Wänden mit einer Auskleidung aus einem eßbaren Material versehen wird.

Es ist bereits ein derartiges Verfahren zur Herstellung einer Verpackung für Speiseeis bekannt. Bei diesem bekannten Verfahren wird eine geschmolzene Glasur in eine spitztütenförmige Waffel eingebracht und auf deren Innenfläche verteilt. Da diese Auskleidung nach dem Erhärten der Glasur zahlreiche kleine Ungänzen aufweist, ist sie nicht absolut dicht. Bei Speiseeis ist dieser Umstand nicht weiter störend, so lange es auf einer hinreichend tiefen Temperatur gehalten wird. Für flüssigkeitshaltige Lebensmittel, die nicht gefroren sind, ist diese bekannte eßbare Verpackung jedoch ungeeignet. Die in dem Lebensmittel enthaltene Flüssigkeit würde nämlich durch die Ungänzen der Auskleidung hindurch in die Waffel diffundieren und diese aufweichen. Die bekannte Verpackung für Speiseeis ist meistens mit einer Folie umwickelt, die die obere Öffnung der Waffel verschließt. Da dieser Verschluß nicht absolut dicht ist, besteht die Gefahr, daß Bakterienkeime aus der Umgebung in die Verpackung eindringen und das Lebensmittel verderben können.

Der Erfindung liegt daher die Aufgabe zugrunde, ein Verfahren der eingangs genannten Art zu schaffen, das zur Herstellung einer eßbaren Verpackung für flüssigkeitshaltige Lebensmittel geeignet ist.

Erfindungsgemäß wird diese Aufgabe mit einem gattungsgemäßen Verfahren gelöst, das dadurch gekennzeichnet ist,
a) daß ein der Form des Mantels entsprechender Einsatz aus Schokolade oder einer Fettglasur vorgefertigt wird, der eine flüssigkeitsundurchlässige Struktur aufweist,
b) daß der vorgefertigte Einsatz oder der Mantel erhitzt wird,
c) daß der vorgefertigte Einsatz in dem Mantel angeordnet und mit diesem durch äußerliches Schmelzen des Einsatzes verschweißt wird, wobei eine Öffnung des Einsatzes frei bleibt, und
d) daß nach dem Füllen des Einsatzes mit einem flüssigkeitshaltigen Lebensmittel die Öffnung des Einsatzes mit einem eßbaren Material dicht verschlossen wird.

Da der Einsatz vorgefertigt ist, sind Herstellungsverfahren möglich, die eine flüssigkeitsundurchlässige Struktur ermöglichen. Dadurch ist gewährleistet, daß das in die Verpackung eingebrachte flüssigkeitshaltige Lebensmittel den Mantel aus gebackenem Teig nicht aufweicht. Da die Öffnung des Einsatzes nach dem Einfüllen des Lebensmittels dicht verschlossen wird, kann das Eindringen von Fremdkörpern, insbesondere Bakterien, Sporen und dergleichen vermindert werden.

Wenn der Einsatz aus Schokolade hergestellt wird, dann kann er an der Innenseite mit Fett oder einem ähnlichen Material beschichtet werden. Dadurch wird eine Sperrschicht geschaffen, die wasserundurchlässig ist.

Nach dem Einbringen des Lebensmittels kann in die Öffnung des Einsatzes zur Bildung einer wasserundurchlässigen Sperrschicht Fett oder ein ähnliches Material in geschmolzenem Zustand eingebracht werden.

Daraufhin kann die Öffnung des Einsatzes mit einem getrennten Deckel verschlossen werden. Der Deckel wird mit dem Einsatz vorzugsweise verschweißt oder verklebt, und er besteht zweckmäßigerweise aus dem gleichen Material wie der Einsatz.

Zum dichten Verschließen des Einsatzes ist es aber auch möglich, daß auf die Sperrschicht Schokolade in geschmolzenem Zustand aufgebracht wird.

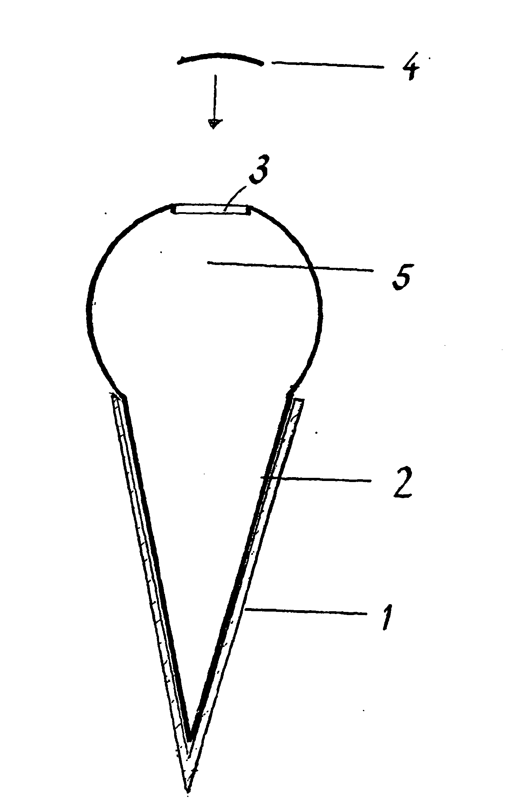

Ein Ausführungsbeispiel der Erfindung ist in der Zeichnung dargestellt und wird nachfolgend näher erläutert.

In der Zeichnung ist eine Verpackung vor dem Befüllen mit einem flüssigkeitshaltigen Lebensmittel im Längsschnitt gezeigt. Die Verpackung umfaßt einen von einer spitztütenförmigen Waffel gebildeten Mantel 1, der im folgenden als Waffeltüte bezeichnet wird. Die Verpackung umfaßt ferner einen vorgefertigten Einsatz 2 aus Schokolade in Form eines Hohlkörpers. Genauer gesagt der Einsatz 2 besteht aus einem der Form der Waffeltüte 1 entsprechenden kegelförmigen Unterteil und aus einem kugelförmigen Oberteil mit einer Öffnung 3. Der Einsatz 2 wird mit einem Verfahren hergestellt, das eine flüssigkeitsundurchlässige Struktur gewährleistet. Hierfür sind beispielsweise das Schleudergußverfahren oder auch andere Formverfahren geeignet. Der Einsatz 2 ist vorzugsweise an der Innenseite mit einer Beschichtung aus Fett oder einem ähnlichen Material versehen, die als Sperrschicht dient. Diese Beschichtung ist ausreichend dick (vorzugsweise 0,5 bis 0,75 mm), um eine Wasserundurchlässigkeit zu gewährleisten.

Unmittelbar vor oder nach dem Einbringen des Einsatzes 2 in die Waffeltüte 1 wird eines dieser beiden Teile erhitzt, damit der Einsatz zumindest äußerlich schmilzt und mit der Waffeltüte 1 eine innige Verbindung eingeht ,so daß eine einstückige Verpackung gebildet wird.

Der von dem Einsatz 2 begrenzte Hohlraum 5 kann durch die Öffnung 3 hindurch mit einem flüssigkeitshaltigen Lebensmittel, beispielsweise mit einem Milchmischerzeugnis wie Mousse oder ähnlichem, gefüllt werden. Anschließend wird Fett oder ein ähnliches wasserunlösliches Material in geschmolzenem Zustand in die Öffnung 3 eingebracht, um auf dem Lebensmittel eine Sperrschicht zu bilden. Sodann wird die Öffnung 3 des Einsatzes 2 mit einem Deckel 4 aus Schokolade dicht verschlossen. Zu diesem Zweck wird der Deckel 4 im Randbereich und/oder der Einsatz 2 im Bereich der Öffnung 3 hinreichend erhitzt, damit die Schokolade schmilzt und eine Schweißverbindung entstehen kann. Alternativ kann der Deckel 4 mit dem Einsatz 2 mittels eines eßbaren Klebstoffs verbunden werden. Damit die Naht möglichst kurz und die Gefahr von Undichtigkeiten möglichst gering ist, sollte die Öffnung 3 nicht größer sein, als dies für den Füllvorgang erforderlich ist.

Zum dichten Verschließen der Öffnung 3 des Einsatzes 2 ist es aber auch möglich, auf die erhärtete Sperrschicht Schokolade in geschmolzenem Zustand aufzubringen. Nach dem Erstarren der Schokolade entsteht eine homogenen Oberfläche des Einsatzes.

Die gefüllte und verschlossene Verpackung kann sodann zum Schutz vor äußeren Verunreinigen oder aus ästhetischen oder sonstigen Gründen mit einem für den jeweiligen Anwendungszweck geeigneten Material umhüllt werden. Zum Verzehr kann der Einsatz 2 nach Beseitigung der Umhüllung im oberen Bereich aufgebissen oder mit einem Löffel oder dergleichen geöffnet werden. Da alle Bestandteile der Verpackung, nämlich die Waffeltüte 1, der Einsatz 2 und der Deckel 4 aus einem eßbaren Material bestehen, können sie zusammen mit dem darin verpackten Lebensmittel verzehrt werden.

Abweichend von dem vorstehend beschriebenen Ausführungsbeispiel könnte die innere Beschichtung des Einsatzes 2 weggelassen werden, wenn eine Sperrschicht nicht erforderlich ist. Im übrigen ist es auch möglich, den Einsatz 2 nicht aus Schokolade, sondern aus einer Glasur herzustellen, die eine flüssigkeitsundurchlässige Struktur hat. Die Form der Verpackung ist auch nicht auf das vorstehend beschriebene Beispiel beschränkt. Der aus gebackenem Teig bestehende Mantel 1 sollte jedoch nach oben divergierende Wände haben, wodurch das Einbringen des Einsatzes 2 und die innige Verbindung desselben mit dem Mantel 1 erleichtert wird.

## Patentansprüche

1. Verfahren zur Herstellung einer eßbaren Verpackung für flüssigkeitshaltige Lebensmittel, bei dem ein aus gebackenem Teig bestehender Mantel mit nach oben divergierenden Wänden mit einer Auskleidung aus einem eßbaren Material versehen wird, **dadurch gekennzeichnet,**
a) **daß** ein der Form des Mantels entsprechender Einsatz aus Schokolade oder einer Fettglasur vorgefertigt wird, der eine flüssigkeitsundurchlässige Struktur aufweist,
b) **daß** der vorgefertigte Einsatz oder der Mantel erhitzt wird,
c) **daß** der vorgefertigte Einsatz in dem Mantel angeordnet und mit diesem durch äußerliches Schmelzen des Einsatzes verschweißt wird, wobei eine Öffnung des Einsatzes frei bleibt, und
d) **daß** nach dem Füllen des Einsatzes mit einem flüssigkeitshaltigen Lebensmittel die Öffnung des Einsatzes mit einem eßbaren Material dicht verschlossen wird.

2. Verfahren nach Anspruch 1, **dadurch gekennzeichnet, daß** der vorgefertigte Einsatz an der Innenseite mit Fett oder einem ähnlichen Material beschichtet wird.

3. Verfahren nach Anspruch 1 oder 2, **dadurch gekennzeichnet, daß** nach dem Füllen des Einsatzes in die Öffnung des Einsatzes Fett oder ein ähnliches Material in geschmolzenem Zustand eingebracht wird, um auf dem Lebensmittel eine flüssigkeitsundurchlässige Sperrschicht zu bilden.

4. Verfahren nach einem der vorhergehenden Ansprüche, **dadurch gekennzeichnet, daß** die Öffnung des Einsatzes mit einem getrennten Deckel verschlossen wird.

5. Verfahren nach Anspruch 4, **dadurch gekennzeichnet, daß** der Deckel mit dem Einsatz verschweißt oder verklebt wird.

6. Verfahren nach Anspruch 5, **dadurch gekennzeichnet, daß** für den Deckel das gleiche Material wie für den Einsatz benutzt wird.

7. Verfahren nach Anspruch 6, **dadurch gekennzeichnet, daß** auf die Sperrschicht Schokolade in geschmolzenem Zustand aufgebracht wird.

## Claims

1. A method of manufacturing an edible packaging for foodstuffs containing liquids, in which a shell made of baked dough with upwardly divergent walls is provided with a lining made of an edible material, **characterised in that**
a) an insert made of chocolate or a glaze of fat corresponding to the form of the shell and which has a liquid-impermeable structure is produced in advance,
b) the insert produced in advance or the shell is heated,
c) the insert produced in advance is disposed inside the shell and is fused with the latter by melting the insert from the outside, an opening in the insert remaining free, and
d) that after filling the insert with a foodstuff containing liquids, the opening in the insert is tightly sealed with an edible material.

2. The method according to Claim 1, **characterised in that** the insert produced in advance is coated on the inside with fat or a similar material.

3. The method according to Claim 1 or 2, **characterised in that** after filling the insert fat or a similar material is introduced through the opening of the insert in molten state in order to form a liquid-impermeable barrier layer on the foodstuff.

4. The method according to any of the preceding claims, **characterised in that** the opening in the insert is closed with a separate cover.

5. The method according to Claim 4, **characterised in that** the cover is fused or stuck together with the insert.

6. The method according to Claim 5, **characterised in that** the same material as for the insert is used for the cover.

7. The method according to Claim 6, **characterised in that** chocolate in a molten state is applied to the barrier layer.

## Revendications

1. Procédé de fabrication d'un emballage comestible pour des aliments contenant des liquides, dans lequel une enveloppe constituée de pâte cuite comportant des parois divergeant vers le haut est pourvue d'un enrobage extérieur en matériau comestible,
**caractérisé en ce que**,
a) on prépare une garniture en chocolat ou en glaçage de matière grasse correspondant à la forme de l'enveloppe et dont la structure est imperméable aux liquides,
b) on chauffe la préparation de garniture ou l'enveloppe,
c) on place la préparation de garniture dans l'enveloppe et on la soude avec cette dernière par fonte extérieure de la garniture, en maintenant dégagée une ouverture de la garniture, et
d) on ferme l'ouverture de la garniture de façon étanche à l'aide d'un matériau comestible après remplissage de l'aliment contenant des liquides.

2. Procédé selon la revendication 1, **caractérisé en ce que** la préparation de garniture est recouverte de matière grasse ou d'une substance analogue côté intérieur.

3. Procédé selon la revendication 1 ou 2, **caractérisé en ce que**, après le remplissage de la garniture, on introduit de la matière grasse ou une substance analogue à l'état fondu dans l'ouverture de la garniture pour former sur l'aliment une couche barrière imperméable aux liquides.

4. Procédé selon l'une des revendications précédentes, **caractérisé en ce que** l'ouverture de la garniture est fermée par un couvercle séparé.

5. Procédé selon la revendication 4, **caractérisé en ce que** le couvercle est soudé ou collé à la garniture.

6. Procédé selon la revendication 5, **caractérisé en ce que** l'on utilise pour le couvercle la même substance que pour la garniture.

7. Procédé selon la revendication 6, **caractérisé en ce que** l'on applique du chocolat à l'état fondu sur la couche barrière.
